**Europäisches Patentamt**

**European Patent Office**

**Office européen des brevets**

(19)

(11) Veröffentlichungsnummer: **0 017 065**
**B1**

(12) **EUROPÄISCHE PATENTSCHRIFT**

(45) Veröffentlichungstag der Patentschrift: **16.11.83**

(21) Anmeldenummer: **80101388.9**

(22) Anmeldetag: **17.03.80**

(51) Int. Cl.³: **F 16 H 55/08**

(54) Im Eingriff befindliches Zahnradpaar aus hochbelastbaren Zahnrädern.

(30) Priorität: **21.03.79 DE 2910981**

(43) Veröffentlichungstag der Anmeldung:
**15.10.80 Patentblatt 80/21**

(45) Bekanntmachung des Hinweises auf die Patenterteilung:
**16.11.83 Patentblatt 83/46**

(84) Benannte Vertragsstaaten:
**BE CH DE FR GB IT NL SE**

(56) Entgegenhaltungen:
**CH - B - 89 852
DE - A - 2 337 367
DE - A - 2 623 214
DE - C - 540 956**

**KARL-HEINZ DECKER, "Maschinelemente
Gestaltung und Berechnung", CARL HANSER
VERLAG, München, 1973**

(73) Patentinhaber: **Thyssen Industrie AG
Am Thyssenhaus 1
D-4300 Essen (DE)**

(72) Erfinder: **Voigtländer, Otto, Dr.-Ing.
Hindemithstrasse 34
D-5630 Remscheid (DE)**
Erfinder: **Mages, Walter, Dr.-Ing.
Paulusstrasse 76
D-5632 Wermelskirchen 1 (DE)**

(74) Vertreter: **Eberhard, Friedrich, Dr.
Am Thyssenhaus 1
D-4300 Essen (DE)**

Courier Press, Leamington Spa, England.

Im Eingriff befindliches Zahnradpaar aus hochbelastbaren Zahnrädern

Die Erfindung betrifft ein im Eingriff befindliches Zahnradpaar aus hochbelastbaren Zahnrädern oder Zahnsegmenten, bei dem der Zahngrund zwischen zwei benachbarten Zähnen in Längsrichtung in Form einer konkaven, etwa in Richtung der Wälzkörpermantellinie bzw. einer Tangente an den Wälzkörper verlaufenden Hohlkehle ausgeführt ist und der Zahnkopf in Zahnlängsrichtung eine in Arbeitsstellung der Räder im wesentlichen äquidistant zum Zahngrund des Gegenrades ausgebildete Form besitzt.

Der allgemeine Trend zum Leichtbau hat auch in der Zahnradund Getriebefertigung zu immer geringeren Leistungsgewichten der Getriebe geführt, d.h. zu einer möglichst hohen Leistungsübertragung bei kleiner Bauhöhe. Ein signifikantes Beispiel hierfür sind die Differentialgetriebe in den Fahrzeughinterachsen. Für diese Ausgleichsgetriebe ist die Zahnflankentragfähigkeit von untergeordneter Bedeutung. Das bestimmende Merkmal für die Baugröße ist einzig und allein die Zahntragfähigkeit. Die Gewichtseinsparung hat für diese Getriebe einen hohen Stellenwert, da sie dem Bereich der ungefederten Massen eines Fahrzeugs zugeordnet sind.

Zur Reduzierung des Leistungsgewichts wurden bislang zwei Wege beschritten, einmal die Optimierung der Zahnfußausrundung, zum anderen die Ausnutzung der werkstoffseitig gegebenen Möglichkeiten, wie beispielsweise Einsatzhärtung u.ä.. Diese Möglichkeiten sind jedoch weitgehend ausgeschöpft, und man ist an einer Grenze angelangt, die mit den derzeit zur Verfügung stehenden technischen Mitteln nicht mehr unterschritten werden kann.

Es ist auch schon versucht worden, die Zahnfußtragfähigkeit dadurch zu erhöhen, daß die Zahngründe konkav und die Scheitelfläche der Zähne in Richtung der Zahnbreite konvex ausgebildet wurden (DE—C 317 280). Die Erhöhung der Tragfähigkeit bei diesem Zahnrad ist jedoch unbefriedigend, wie im folgenden noch näher erläutert wird. Gleiches gilt für das aus der DE—A—2 053 789 bekannte Kegelrad, bei dem die Zahnlücken mit seitlichen Verstärkungsabschnitten versehen sind, die sich quer zu den Zahnlücken erstrecken und benachbarte Zähne miteinander verbinden.

Der vorliegenden Erfindung liegt die Aufgabe zugrunde, die Nachteile der bekannten Zahnräder hinsichtlich ihrer Leistung und Ihres Gewichts zu vermeiden und ein Zahnrad zu schaffen, welches wesentlich höher belastbar ist als die bisher bekannten Zahnradformen.

Die Lösung der Aufgabe besteht bei einem Zahnrad der eingangs genannten Gattung darin, daß die Form der Hohlkehle im Zahngrund im Bereich zwischen den radialen Begrenzungslinien des Tragbildes im Original-Einbauzustand des Zahnradpaares annähernd eine Äquidistante zur benachbarten Begrenzungslinie des Tragbildes ist.

Ein derartiges im Original-Einbauzustand auftretendes Tragbild ist in DIN 3971, Bild 21, linkes, oberes Bild unter "Mittentragen, kissenförmig" dargestellt. Die anderen Tragbilder an Bogen- und Zahn-Kegelrädern dieser Seite sind fehlerhafte Tragbilder. Durch die erfindungsgemäß erzielte Annäherung der Begrenzung des aktiven Flankenprofils an das Tragbild werden die Abstände des Kraftangriffspunktes von dem stützenden Radgrundkörper in optimalem Maße verringert, wodurch geringe Biegemomente mit nur geringer elastischer Verformung auftreten. Diese geringe elastische-Nachgiebigkeit verbessert das Laufverhalten und hält auch die dynamische Belastung bei Stößen gering. Die Geräuschentwicklung wird vermindert und durch die hohe Steifigkeit des erfindungsgemäßen Rades das Auftreten von zusätzlichen dynamischen Kräften vermieden, wobei das Rad bei geringem Gewicht hochbelastbar ist. Bei dem Zahnrad nach der DE—C—317 280 wird unberücksichtigt gelassen, wie sich die Lastverteilung auf der Zahnflanke infolge des Tragbildes abspielt. Besonders bei den leicht herzustellenden flachen Vertiefungen des Zahngrundes bei der spanenden Herstellung des bekannten Rades wird durch zum Teil großen Abstand des Zahngrundes von den tragenden Bereichen der Zahnflanken die Tragfähigkeit nur unbedeutend erhöht. Entsprechendes gilt von den Zahnrädern nach der DE—A—20 53 789, nach der ebenfalls keine Rücksicht auf das Tragbild genommen wird und lediglich flache Verstärkungen angebracht sind.

Im einzelnen kann die Erfindung wir folgt ausgestaltet sein.

Eine einfach zu fertigende Form der Hohlkehle im Zahngrund ist die Kreisbogenabschnittsform. Auch an den Zahnköpfen ist diese Form besonders leicht herstellbar.

Es ist auch möglich, die Form der Hohlkehle im Zahngrund durch zwei oder mehr in stumpfem Winkel aufeinander treffende Geraden zu bilden, wobei eine besonders gute Tragfähigkeit erreichbar ist.

Eine Ausführungsart mit besonders günstigem Abwälzverhalten ist so ausgebildet, daß die Form der Hohlkehle im Zahngrund als Ellipsenabschnitt ausgeführt ist.

Man ist natürlich nicht darauf beschränkt, bei einer Zahnradpaarung an Kopf und Grund eines Rades mit gleichen Formen, also z.B. konkav und konvex gekrümmten Kreisbögen zu arbeiten, sondern es ist auch möglich, verschiedene Ausbildungen von Kopf und Grund jeden Rades zu wählen; die Anpassung ist jeweils nur an das Gegenrad vorzunehmen. Im übrigen gilt ganz allgemein, daß der Zahnkopf in beliebiger Form ausgebildet sein kann, jedoch so, daß eine Berührung mit dem Zahngrund des Gegenrades sicher vermieden wird.

Ein Kegelzahnradpaar ist zweckmäßig so ausgebildet, daß die konkave Hohlkehle des Zahngrundes etwa in Richtung der Wälzkegelmantellinie bzw. einer Tangente an den Wälzkegel verläuft.

Eine besonders günstige Form des Kegelzahnradpaars entsteht dadurch, daß die konkave Hohlkehle des zahngrundes zwischen einem etwa rohrförmigen und parallel zur Zahnradachse verlaufenden Teil und einem daran anschließenden und einen Winkel damit bildenden etwa flanschartigen Teil des Zahnrades liegt und etwa in Richtung der Wälzkegelmantellinie bzw. einer Tangente an den Wälzkegel verläuft.

Das Ablaufverhalten der Zahnradpaarungen kann dadurch noch verbessert werden, daß man die Zahnflanken in bekannter Weise zusätzlich durch eine Höhen- und/oder Breitenballigkeit so ausführt, daß die Kontaktzone zwischen zwei im Eingriff befindlichen Zähnen, das sogenannte Tragbild, eine nahezu ellipsenförmige Fläche bildet. Dadurch wird vermieden, daß beim Abwälzen der Zähne nur oder vorweigend die Kanten tragen. Außerdem wird die Einhaltung einer Äquidistanten zum Tragbild für die Form von Zahngrund und Zahnkopf durch Einstellung der verhältnismäßig einfachen Ellipsenform erleichtert.

Dadurch, daß die Form der Hohlkehle im Zahngrund an der seitlichen Begrenzung einen Winkel gegenüber der Wälzkörpermantelfläche von 45° oder mehr aufweist und seitlich bis in den Bereich der Wälzkörpermantellinie hochgezogen ist, wird ein besonders guter Stützeffekt bei schmaler Bauweise erreicht, weil man sich besonders eng an das Tragbild anlehnen kann.

Dadurch daß der Winkel 90° beträgt, ergibt sich eine geschlossene Fläche für den Zahnkopf und den Zahngrund, die knickfrei ineinander übergehen. Die Äquidistanz zum Tragbild ist dabei bei besonders schmaler Bauweise zu erreichen und optimale Tragfähigkeit wird erreicht.

Die Erfindung ist selbstverständlich nicht nur auf Zahnräder beschränkt, sondern ist bei allen zahnradartigen Übertragungselementen anwendbar, wo es auf die Ubertragung großer Leistungen ankommt. Es hat sich herausgestellt, daß die Modifikation des Zahnkopfs noch den weiteren Vorteil mit sich bringt, daß ein weicherer Eingriff und damit ein geräuschärmerer Lauf der Zähne erhalten wird. Anstelle eines stoßartigen Eingriffs über der gesamten Zahnbreite erfolgt der Zahnkontakt nunmehr zuerst punktförmig und bildet sich erst bei fortschreitendem Eingriff über die gesamte Zahnbreite aus. Damit brauchen nicht mehr besondere Maßnahmen zur Verbesserung des Laufverhaltens, wie beispielsweise Zahnkopf- und Zahnfußrücknahmen angewendet zu werden, was eine wesentliche Vereinfachung bei der Herstellung bedeutet. Das erfindungsgemäße Zahnradpaar kann nach den bekannten Herstellungsverfahren für Zahnräder leicht gefertigt werden. Besonders geeignet sind das Schmiede- oder Preßverfahren.

In den Zeichnungen sind beispielsweise Ausführungsformen der erfindungsgemäßen Zahnräder dargestellt und zwar zeigen die

Fig. 1—3 unterschiedliche Ausführungsformen der Kopf- und Fußausbildung der Zähne eines Zylinderrades,

Fig. 4 einen Schnitt durch die Zahnlücke eines konventionellen Kegelrades mit erfindungsgemäßer Form,

Fig. 5 eine perspektivische Darstellung eines Kegelrades,

Fig. 6 einen Schnitt der durch die Linien 14, 18 definierten Fläche der Fig. 5.

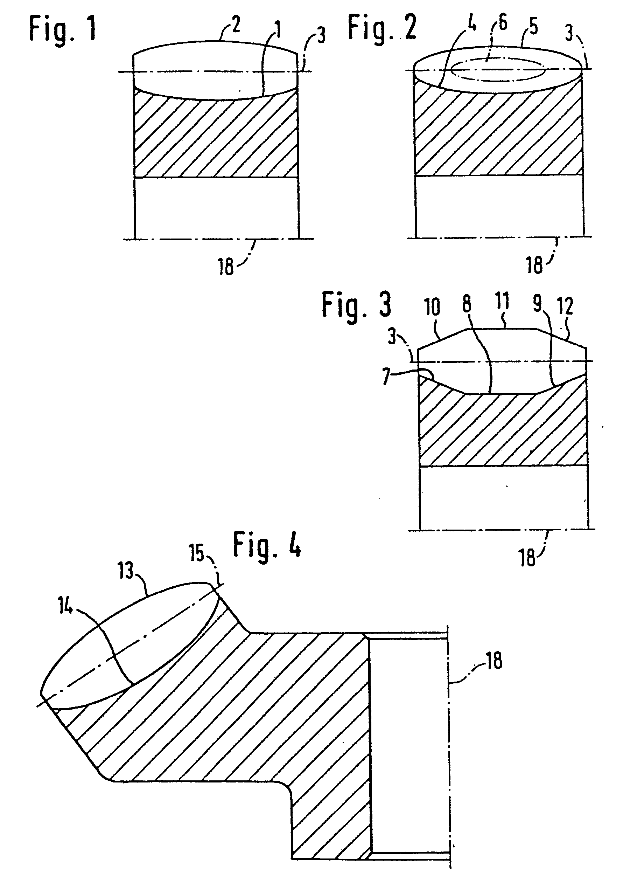

In den Fig. 1—3 sind Schnittbilder von verschieden ausgeführten Zylinderrädern dargestellt, wobei der Schnitt genau in der Hälfte zwischen zwei benachbarten Zähnen liegt.

Nach Fig. 1 ist der Zahngrund 1 von einer konkaven Hohlkehle gebildet, welche von einem Kreisbogen begrenzt ist. Der Zahnkopf 2 besitzt eine zum Zahngrund 1 spiegelbindliche, von einem Kreisbogen gebildete Form. Die den Zahngrund 1 bildende Hohlkehle liegt in Richtung der Wälzzylindermantellinie 3 des Zahnrades.

Nach Fig. 2 bildet der Zahngrund 4 zusammen mit dem Zahnkopf 5 eine Ellipse. Der Zahngrund 4 ist im Bereich zwischen den radialen Begrenzungslinien des Tragbildes 6 im Original-Einbauzustand des Zahnradpaares annähernd eine Äquidistante zur benachbarten Begrenzungslinie des Tragbildes 6. Der Bereich des Zahngrundes 4 liegt zwischen den radialen Begrenzungslinien der größeren Achse des nahezu ellipsenförmigen Tragbildes 6, die senkrecht zur Zahnradachse 18 in Fig. 2 laufen.

Nach Fig. 3 wird der Zahngrund 7, 8, 9 von drei Geraden gebildet, von denen jeweils zwei in einem stumpfen Winkel aufeinandertreffen. Der Zahnkopf 10, 11, 12 ist entsprechend spiegelbildlich ausgebildet, kann aber auch in jeder anderen, dem Zahngrund des Gegenrades entsprechenden Form ausgebildet sein. Da es sich hierbei um geradverzahnte Räder handelt, liegen die den Zahngrund bildenden Hohlkehlen aller drei Ausführungen etwa parallel zur Wälzzylindermantellinie 3. Bei schräg-oder spiralverzahnten Rädern erstrecken sich die den Zahngrund bildenden Hohlkehlen in Richtung der Tangente an den Wälzzylinder, wobei die Lage der Tangente etwa dem Schrägungswinkel des Rades entspricht.

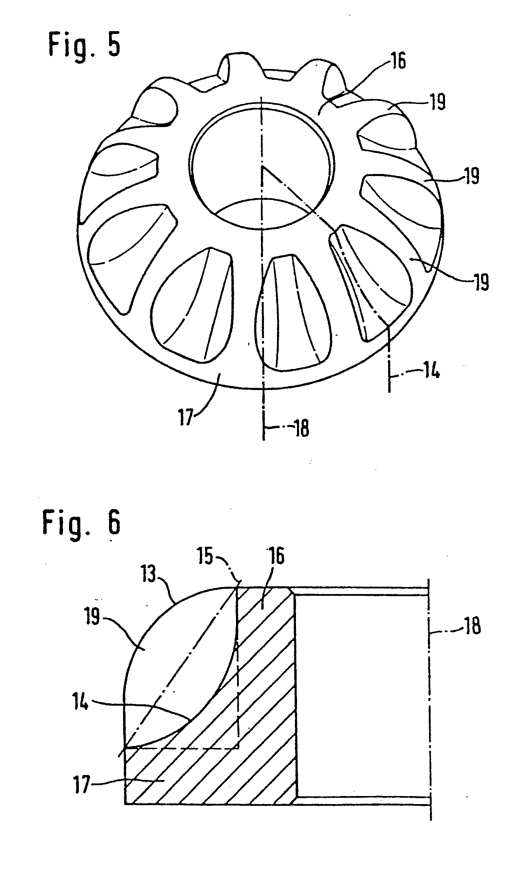

In Fig. 4 ist ein Schnittbild durch die Zahnlücke eines erfindungsgemäßen Kegelrades bezüglich der Ausführung der Kopf- 13 und Fußausbildung 14 der Zähne dargestellt. Die den Zahngrund 14 bildende Hohlkehle erstreckt sich etwa in Richtung der Wälzkegelmantellinie 15 des Kegelrades. Bei schräg- oder spiralverzahnten Kegelrädern gilt für die Lage der den Zahngrund bildenden Hohlkehle die für Zylinderräder getroffene Aussage analog.

In den Figuren 5 und 6 ist ein Kegelrad dargestellt, welches aus einem etwa rohrförmigen Teil 16 und einem daran anschließenden und einen Winkel mit dem rohrförmigen Teil bildenden flanschartigen Teil 17 besteht. Der rohrförmige Teil 16 liegt dabei parallel zur Zahnradachse 18. Zwischen dem rohrförmigen Teil 16 und dem flanschartigen Teil 17 liegen nun die Zähne 19, deren Zahngrund 14 von einer konkaven Hohlkehle mit erfindungsgemäßer Form begrenzt wird. Der Zahnkopf 13 ist spiegelbildlich zum Zahngrund 14 ausgebildet. Die Hohlkehle liegt etwa in Richtung der Wälzkegelmantellinie 15.

## Patentansprüche

1. Im Eingriff befindliches Zahnradpaar aus hochbelastbaren Zahnrädern oder Zahnsegmenten, bei dem der Zahngrund (1, 4, 7, 8, 9, 14) zwischen zwei benachbarten Zähnen in Zahnlängsrichtung in Form einer konkaven, etwa in Richtung der Wälzkörpermantellinie bzw. einer Tangente an den Wälzkörper verlaufenden Hohlkehle ausgeführt ist und der Zahnkopf (2, 5, 10, 11, 12, 13) in Zahnlangsrichtung eine in Arbeitsstellung der Räder im wesentlichen äquidistant zum Zahngrund des Gegenrades ausgebildeten Form besitzt, dadurch gekennzeichnet, daß die Form der Hohlkehle im Zahngrund (1, 4, 7, 8, 9, 14) im Bereich zwischen den radialen Begrenzungslinien des Tragbildes (6) im Original-Einbauzustand des Zahnradpaares annähernd eine Äquidistante zur benachbarten Begrenzungslinie des Tragbildes ist.

2. Zahnradpaar nach Anspruch 1, dadurch gekennzeichnet, daß die Form der Hohlkehle im Zahngrund (1) als Kreisbogenabschnitt ausgeführt ist.

3. Zahnradpaar nach Anspruch 1, dadurch gekennzeichnet. daß die Form der Hohlkehle im Zahngrund (7, 8, 9) durch zwei oder mehr in stumpfem Winkel aufeinander treffende Geraden ausgebildet ist.

4. Zahnradpaar nach Anspruch 1, dadurch gekennzeichnet, daß die Form der Hohlkehle im Zahngrund (4) als Ellipsenabschnitt ausgeführt ist.

5. Hochbelastbares Kegelzahnradpaar nach einem der obigen Ansprüche, dadurch gekennzeichnet, daß die konkave Hohlkehle des Zahngrundes (14) etwa in Richtung der Wälzkegelmantellinie (15) bzw. einer Tangente an den Wälzkegel verläuft.

6. Hochbelastbares Kegelzahnradpaar nach Anspruch 5, dadurch gekennzeichnet, daß die konkave Hohlkehle des Zahngrundes (14) zwischen einem etwa rohrförmigen und parallel zur Zahnradachse (18) verlaufenden Teil (16) und einem daran anschließenden und einen Winkel damit bildenden, etwa flanschartigen Teil (17) des Zahnrades liegt und etwa in Richtung der Wälzkegelmantellinie (15) bzw. einer Tangente an den Wälzkegel verläuft.

7. Zahnradpaar nach einem der obigen Ansprüche, dadurch gekennzeichnet, daß die Zahnflanken mit einer Höhen- und/oder Breitenballigkeit derart versehen sind, daß die Kontaktzonen der in Eingriff befindlichen Zähne in etwa ellipsenförmige Flächen bilden.

8. Zahnradpaar nach einem der obigen Ansprüche, dadurch gekennzeichnet, daß die Form der Hohlkehle im Zahngrund an der seitlichen Begrenzung einen Winkel von 45° oder mehr gegenüber der Wälzkörpermantelfläche aufweist und seitlich bis in den Bereich der Wälzkörpermantellinie hochgezogen ist.

9. Zahnradpaar nach Anspruch 8, dadurch gekennzeichnet, daß der Winkel rund 90° beträgt.

## Revendications

1. Engrenage en prise constitué de pignons ou de segments dentés pouvant supporter des charges élevées, dans lequel le fond d'entredents (1, 4, 7, 8, 9, 14) entre deux dents adjacentes, est réalisé dans le sens longitudinal des dents, sous la forme d'une gorge concave s'étendant sensiblement dans le sens de la génératrice du corps primitif ou d'une tangente à celui-ci, et la tête de la dent (2, 5, 10, 11, 12, 13) a, dans le sens longitudinal de la dent, une forme sensiblement équidistante du fond de l'entre-dents du pignon opposé, lorsque les pignons sont en position de travail, caractérisé par le fait que la forme de la gorge dans le fond d'entre-dents (1, 4, 7, 8, 9, 14), dans la zone entre les lignes de délimitation radiale de la portée (6), est sensiblement équidistante de la ligne de délimitation adjacente de la portée, dans l'état original de montage de l'engrenage.

2. Engrenage selon la revendication 1, dans lequel la forme de la gorge, dans le fond de l'entre-dents (1) est réalisée sous forme de portion d'arc de cercle.

3. Engrenage selon la revendication 1, dans lequel la forme de la gorge dans le fond d'entredents (7, 8, 9) est constituée de deux droites, ou plus, se coupant à angle obtus.

4. Engrenage selon la revendication 1, dans lequel la forme de la gorge, dans le fond d'entre-dents (4) est réalisée en tant que portion d'ellipse.

5. Engrenage conique pouvant supporter une charge élevée selon l'une des revendications 1 à 4, dans lequel la gorge concave du fond d'entre-dents (14) s'étend sensiblement dans le sens de la génératrice du cône primitif (15) au d'une tangente au cône primitif.

6. Engrenage conique pouvant supporter une charge élevée selon la revendication 5, dans lequel la gorge concave dans le fond d'entredents (14) se trouve entre une partie (16) sensiblement tubulaire, parallèle à l'axe (18) du pignon, et une partie (17) du pignon, analogue à un rebord, se raccordant à la précédente en faisant un angle avec elle, et s'étend sensiblement dans le sens de la génératrice du cône primitif (15) ou d'une tangente à celui-ci.

7. Engrenage selon l'une des revendications 1 à 6, dans lequel les flancs des dents présentent un bombement en hauteur et en largeur, en sorte que les zones de contact des dents se trouvant en prise constituent des surfaces sensiblement elliptiques.

8. Engrenage selon l'une des revendications 1 à 7, dans lequel la forme de la gorge dans le fond d'entre-dents sur la délimitation latérale fait avec la surface latérale du corps primitif un angle de 45° ou plus, et qu'elle remonte sur le côté jusque dans la zone de la génératrice du corps primitif.

9. Engrenage selon la revendication 8, dans lequel l'angle est de 90°.

**Claims**

1. Pair of engaged gears comprising toothed wheels or toothed segments capable of accepting high loads, the tooth root (1, 4, 7, 8, 9, 14) between two neighbouring teeth in the longitudinal direction of the teeth being arranged in the form of a concave fillet extending substantially in the direction of the pitch body generatrix or a tangent to the pitch body, and the tooth tip (2, 5, 10, 11, 12, 13) in the longitudinal direction of the teeth has a shape which in the working position of the gears is substantially equidistant from the tooth root of the mating wheel, characterised in that the form of the fillet in the tooth root (1, 4, 7, 8, 9, 14) in the region between the radial boundary lines of the tooth bearing zone (6) in the original mounted state of the gear pair is approximately an equidistant one from the neighbouring boundary line of the tooth bearing zone.

2. Pair of gears according to claim 1, characterised in that the shape of the fillet in the tooth root (1) is formed as a circular segment.

3. Pair of gears according to claim 1, characterised in that the shape of the fillet in the tooth root (7, 8, 9) is formed by two or more straight lines which meet one another at an obtuse angle.

4. Pair of gears according to claim 1, characterised in that the shape of the fillet in the tooth root (4) is formed as an elliptical segment.

5. Pair of gears capable of accepting high loads according to one of the proceding claims, characterised in that the concave fillet of the tooth root (14) extends substantially in the direction of the pitch cone generatrix (15) or a tangent to the pitch cone.

6. Pair of gears capable of accepting high loads according to claim 5, characterised in that the concave fillet of the tooth root (14) is situated between a substantially tubular gear axis (18) and a substantially flange-like portion (17) joined to the first portion and forming an angle therewith, and is disposed substantially in the direction of the pitch cone generatrix (15) or of a tangent to the pitch cone.

7. Pair of gears according to one of the preceding claims, characterised in that the tooth flanks are provided in such a manner with a height or/and width convexity that the contact zones of the engaging teeth form substantially elliptical areas.

8. Pair of gears according to one of the preceding claims, characterised in that the shape of the fillet in the tooth space bottom has at the lateral boundary an angle of 45° or more relatively to the pitch figure generatrix.

9. Pairs of gears according to claim 8, characterised in that the angle amounts to about 90°.

Fig. 1

Fig. 2

Fig. 3

Fig. 4

Fig. 5

Fig. 6